# EUROPEAN PATENT SPECIFICATION

(11) **EP 0 967 889 B1**
(45) Date of publication and mention of the grant of the patent: **11.07.2001**
(21) Application number: 98909382.8
(22) Date of filing: 03.02.1998
(51) Int. Cl.: A23L 1/0532, A23L 1/0526, A23P 1/16, A23G 9/02, A23D 7/015

(54) **FOODS CONTAINING A GELLING AGENT MIXTURE**
LEBENSMITTEL ENTHALTEND EINE MISCHUNG GELIERENDER WIRKSTOFFE
PRODUITS ALIMENTAIRES CONTENANT UN MELANGE D'AGENTS GELIFIANTS

(30) Priority: 05.02.1997 EP 97200320
(43) Date of publication of application: 05.01.2000
(73) Proprietor: QUEST INTERNATIONAL B.V., 1411 GP Naarden (NL)
(72) Inventor: BOURKE, Neil, NL-1351 KB Almerehaven (NL)
(74) Representative: Kraag, F., Ir.
(86) International application number: EP9800560
(87) International publication number: WO9834499

(56) References cited:
- EP-A- 0 350 419
- GB-A- 1 519 294
- US-A- 4 145 454
- US-A- 4 244 983
- US-A- 4 296 134
- US-A- 5 232 733
- PATENT ABSTRACTS OF JAPAN vol. 015, no. 450 (C-0885), 15 November 1991 & JP 03 191759 A (INA SHOKUHIN KOGYO KK), 21 August 1991,
- PATENT ABSTRACTS OF JAPAN vol. 012, no. 209 (C-504), 15 June 1988 & JP 63 007757 A (NIPPON OIL & FATS CO LTD), 13 January 1988,
- DATABASE CHEMABS CHEMICAL ABSTRACTS SERVICE, COLUMBUS, OHIO, US AN 110:211316, XP002065988 & JP 01 039 956 A (SNOW BRAND MILK PRODUCTS CO.)
- DATABASE FSTA INTERNATIONAL FOOD INFORMATION SERVICE (IFIS), FRANFURT/MAIN, DE AN 88-1-11-t0035, M.TAKO: XP002065989 & AGRICULTURAL AND BIOLOGICAL CHEMISTRY, vol. 52, no. 4, 1988, JP, pages 1071-1072,

## Description

The invention concerns foods containing a water phase which is structured with a gelling agent mixture comprising agar and certain galactomannan gums.

Food products consist of a complicated mixture of solid and liquid components including, in most cases, a water phase For many food products structuring of the water phase is essential to give the food the desired properties i.e. an appealing appearance, the right mouthfeel on consumption, the desired flavour and taste and other properties expected by the consumer. Structuring of the water phase is often accomplished with gelling agents such as gelatin, agar, carrageenan etc. Each gelling agent has its own gelling properties and produces gels with specific characteristics which make them useful for particular types of foods. Thus, gelatin gels rather slowly on cooling and the gels are elastic, give little or no syneresis and retain appreciable gel strength after shear being applied to the gel.

Because of these properties gelatin is the preferred gelling agent for food products for which the production process comprises the following two steps:
i mixing of at least part of the ingredients, including the water phase, with the gelling agent at a temperature above the temperature at which the mixture gells,
ii thereafter: mechanical treatment which involves the application of shear to the gel at a temperature below the temperature at which the mixture gells.

Examples of such food products are: low-fat spreads (i.e. spreads containing less than 60% 0 fat), mousse-type foods and ice cream.

Due to the particular properties of gelatin it is possible to obtain stable gels with little or no syneresis and which retain substantial gel strength, also after the application of shear. Such shearing may be an unintentional, but inescapable consequence of the mechanical treatment of the food product, such as may take place in equipment for packaging the food product in containers, or in mixers for mixing in additional ingredients. On the other hand shearing may be applied purposely to give the food product the desired structure. The latter holds e.g. for low-fat spreads and ice cream.

However, gelatin has the disadvantage that it is of animal origin and therefore unfit for vegetarian diets and, depending on whether it is of bovine or porcine origin, its consumption may also violate certain religious food rules. Therefore there is a need for an alternative gelling agent which should preferably be of vegetable origin.

Many different gelling hydrocolloids and hydrocolloid mixtures have been described for use in spreads, particularly low-fat spreads.

Thus, GB 1,450,269 discloses low-fat spreads in which the aqueous phase contains a mixture of pectin and either carageenan, agar, guar gum, locust bean gum, etc, particularly a mixture of pectin and carrageenen.

GB 1,564,800 discloses low-fat spreads in which gelatin or Danish carrageenan is used as the gelling agent. Since the aqueous phase also contains protein, a deflocculation agent is also added if the aqueous phase is acidic. As deflocculation agents may be used xanthan gum, locust bean gum, guar gum, or sodium carboxymethyl cellulose. In fact, gelatin is the only gelling agent exemplified. One of the examples mentiones the use of xanthan gum as a defloculation agent.

EP-B-0 011 344 discloses water-in-oil type emulsions for use as low-fat spreads containing as the gelling agent a mixture of locust bean gum and xanthan gum and/or carrageenan. Sometimes an additional amount of gelatin is added as well.

EP-B-0 052 899 discloses similar low-fat spreads containing as the gelling agent a mixture of on the one hand maltodextrin or pectin or lambda carrageenan or alginate and on the other hand guar gum or locust bean gum or iota carrageenan. Preferred are pectin or maltodextrin and guar gum.

US-A-4 145 454 discloses ice-cream which is stabilized with mixtures comprising
(a) locust bean gum and / or tara gum and
(b) kappa - carrageenan and / or xanthan gum and / or agar - agar.

EP-A-0 430 329 discloses very-low-fat spreads. As the gelling agent the examples only disclose gelatin and carrageenan.

In EP-A-0 380 170 it is disclosed to prepare low-fat spreads using as the gelling agent a mixture of gelatin or agar (0.1-5% w/w) with solubilized starch (0.1-5% w/w). Particularly these spreads contain 2% gelatin or agar and 2% of solubilized starch.

Agar, unlike gelatine, gels rapidly to relatively brittle gels, which show appreciable syneresis and little gel recovery after the application of shear. In spite of what is disclosed in EP-A-0 380 170, agar is therefore not very suitable for replacing gelatin in foods products which during production undergo the two process steps mentioned above.

It has been described in EP-A-0 570 252 that gel strength and syneresis of agar can de reduced through cutting the agar molecules by acid treatment. From S.M. Fiszman et al, Rev. Agroquim. Tecnol Aliment. **27**(4), t987 519-29 it is known that the addition of locust bean gum in proportions of 25-75% increases the rupture strength and decreases the deformability modulus of agar gels. From S. Baidon et al, Rev. Agroquim. Tecnol Aliment. **27**(4), 1987 545-55 it is known that the addition of locust bean gum in proportions of 25-75% or a 1:1 mixture of locust bean and guar gum in a proportion of 50% decreases syneresis of agar gels.

E.R. Morris, "Mixed Polymer Gels", in: "Food Gels", Ed. P. Harris, 1990, pag. 291-359 describes synergism between galactomannans such as locust bean gum and the well known marine hydrocolloids such as agar and carrageenan. A theoretical outline of the effects of the interaction is given which, however, does not lead to dear guidelines as to the effects to be obtained in practice. Both guar gum as well as locust bean gum separately appear to increase gel strength of agar gels and reduce syneresis (page 342-43) and give a less brittle gel.

L.G. Enriquez and G.J. Flick, "Marine Colloids", in: "Developments in Food Science 19, Food Emulsifiers", Ed. G. Charalambous and G. Doxastakis, pag.248, describe that agar has been used in combination with tragacanth and locust bean gum to improve the smoothness and consistency of ice cream and sherbets, and also state that the use of other hydrocolloids such as locust bean gum and gelatin in combination with agar is desirable to stabilize and improve the shelve life of sherbets.

Guar gum and locust bean gum are thickening agents. Thus, they can be used to obtain very viscous aqueous solutions. However, they do not produce gels, i.e. they do not produce an aqueous system which does not flow without the application of pressure.

Although in the prior art reduction of syneresis and brittleness of agar gels have been attributed to the addition of galactomannan gums, particularly locust bean gum, none of these references give any indication about the influence of either locust bean gum or guar gum on the gelling speed or gel recovery after the application of shear. Furthermore, although in the prior art the mechanical properties of pure aqueous gels consisting of mixtures of agar, locust bean gum and guar gum have been tested. real food products comprising such mixtures as the gelling agent appear to be unknown and their properties cannot be predicted from the theoretical considerations pubilshed

It has now been found that mixtures of agar, guar gum and locust bean gum are very suitable gelling agents for food products compnsing a water phase, particularly for food products for which the production process comprises the following two steps:
i mixing of at least part of the ingredients, including the water phase, with the gelling agent at a temperature above the minimum mixing temperature as hereinafter defined,
ii thereafter: mechanical treatment which involves shearing of the gel at a temperature below the maximum shearing temperature as hereinafter defined.

In such food products these gelling agent mixtures are able to replace gelatin, while maintaining the properties of slow gelling, low syneresis and gel recovery after the application of shear.

The invention therefore provides a process for preparing food products comprising a gelled aqueous phase, which process compnses the steps of:
i mixing at least part of the ingredients, including the water phase with a gelling agent mixture comprising agar, guar gum and locust bean gum above the minimum mixing temperature,
ii shearing the mixture below the maximum shearing temperature.

The mixing in step i is generally done at a temperature at which the aqueous phase is still a non-gelled liquid. The precise temperature at which the aqueous phase will start to get is dependent to some extent on the properties and the amount of agar in the aqueous phase and on the other components in the aqueous phase. Generally the minimum mixing temperature is 40°C, preferably it is 45°C.

Shearing is generally applied when gelling has at least started. The temperature at which the aqueous phase starts to gel to a measurable extend depends on the factors outlined above. Thus, the maximum shearing temperature is generally 40°C, preferably it is 35°C.

The invention is particularly suitable for food products which also comprise a lipid phase and thus the process according to the invention preferably also comprises the step of mixing the aqueous phase including the agar. guar gum and locust bean gum with a lipid phase.

Thus, the invention furthermore provides food products comprising a lipid phase and an aqueous phase which is gelled with a gelling agent mixture comprising agar, guar gum and locust bean gum. In such food products the use of gelatin as a gelling agent is superfluous. The lipid phase in such food products should comprise at least 0.1%, preferably at least 0.5% by weight of the food product. Generally, the lipid phase will not comprise more than 80% by weight of the food product, preferably not more than 60%. The lipid phase will generally comprise fats and/or fatty oils, but it may also comprise, or even consist entirely of, mono-and/or diglyceride emulsifiers.

If the lipid phase is mixed with the aqueous phase above the maximum shearing temperature, it may coincide with step i or, alternatively, it may be done after step i has produced a homogeneous aqueous phase.

If, on the other hand, the lipid phase is mixed with the aqueous phase below the maximum shearing temperature, this mixing may provide the shearing required in step ii and thus, step ii and the mixing of lipid and aqueous phase may partly or completely coincide. Which procedure is generally used or preferred, is determined by the type of food product and/or the type of equipment available. Often, additional steps involving shear are applied after mixing of lipid and aqueous phases. Such shear may be applied e.g. by the equipment used for filling the packaging or containers for the food product However, for many products mixing or other processing steps involving the application of shear are necessary to give the product the required structure. Examples are: cooling under shear as used in the production of spreads, freezing under shear as used in the production of ice cream, or mixing in sufficient air to obtain a mousse type product, either of the sweet (dessert) type or of the savoury type such as fish mousses.

The agar used in the gelling agent mixture for the process according to the invention may be derived from,the conventional seaweeds used for the production of agar and may be obtained according to well known procedures. Seaweed sources, such as Gelidium and Gracilaria species, and production process are described e.g. by LG. Enriquez and G.J. Flick in Marine Colloids (vide supra). Particularly suitable are agars which have undergone a mild alkaline treatment during extraction from the seaweed, or agars which have been made low temperature soluble, e.g. as described in JP-A-58.193660. Such so called "low temperature soluble agars" (LTS agar) are commercially available and have the advantage that they may be completely dissolved in the aqueous phase at temperatures only slightly above the minimum mixing temperature e.g. at or above 45°C. Conventional agars, however, have to be heated in water to at least 80°C, preferably at least 90°C to obtain a dear solution. In that case the complete aqueous phase may be prepared at that high temperature, or altenatively a concentrated aqueous agar solution may be made at a high temperature which can then be diluted and mixed with the other ingredients of the aqueous phase at a lower temperature above the minimum mixing temperature.

Suitable guar gums and locust bean gums are commercially available from a variety of manufacturers. The guar gum may be mildly modified e.g. by enzymatical treatment. Instead of Locust bean gum another galactomannan gum may be used in which the galactose/mannose ratio is comparable to that in locust bean gum. Examples of such gums are tara gum and guar gum which is enzymatically treated to reduce the number of galactose side chains on the mannose polymer backbone to a galactose content comparable to that in locust bean gum, such as described in EP-A-255153. For the purposes of this invention such gums are within the scope of the term "locust bean gum".

The gelling agent mixtures used in the process according to the invention preferably comprise:
90-10% by weight of agar, more preferably 80-20%;
5-80% by weight of guar gum, more preferably 10-70%;
5-80% by weight of locust bean gum, preferably 10-70%.

The ratio between the amounts of guar and locust bean gum is preferably between 6:1 and 1:6, more preferably between 4:1 and 1:4.

The amount of gelling agent mixture which is used in a food product primarily depends on the type of food product, i.e. the amount of aqueous phase present, the consistency and viscosity required, the influence of the other components on the viscosity, the temperature of storage and of consumption etc. Generally, not more than 5% by weight (based on the amount of water in the food product) of gelling agent mixture is normally used in a food product, preferably the amount is at or below 2% w/w. To obtain meaningfull water structuring properties an amount of at least 0.01% by weight, based on the amount of water, preferably at least 0.05% will normally be used, although lower amounts could be used if other components with water structuring properties are present as well.

The term "gelling agent mixture" refers to the fact that the three components are all added to and present in the aqueous phase. They need not actually be mixed together before being added to the aqueous phase, but instead may be added separately.

### The invention is illustrated by the non-limiting examples below:

### Example 1

Two batches of ice cream were prepared according to the recipes below in which recipe I gives a standard ice cream containing gelatin and recipe II gives ice cream in which gelatin is replaced by a gelling agent mixture according to the invention.

| Ingredients | Recipe | Recipe II |
|---|---|---|
| | % | % |
| Butter oil | 10.00 | 10.00 |
| skimmed milk powder | 10.00 | 10.00 |
| Sugar | 12.00 | 12.00 |
| Corn sirup solids | 4.00 | 4.00 |
| Dextrose | 2.00 | 2.00 |
| Sherex IC9164* | 0.35 | 0.35 |
| Gelatin 130 BL/B | 0.60 | |
| Gelling agent mixture** | | 0.135 |
| Water | up to 100% | |

| | | |
|---|---|---|
| * Emulsifier/stabiliser mixture for ice cream marketed by Quest International | | |
| ** The gelling agent mixture according to the invention consisted of 60% LTS agar, 20% locust bean gum and 20% guar gum | | |

Sherex IC9164 was premixed with 1/6 part of the sugar and hydrated into the water with vigorous agitation for 5 minutes The mixtures were heated to 50°C and the other dry ingredients added, followed by the pre-melted butter oil. The mixtures were mixed with a high speed mixer for 1 minute, heated to 65°C and then homogenised at 180 and 50 bar. Thereafter the mixes were pasteurized for 30 seconds at 82°C in a plate heat exchanger and cooled to 5°C.

After aging for 24 hours each ice cream mix was frozen and aerated in a continuous Technology MF50 ice cream freezer to an overrun of 100%.

Both ice cream batches had a smooth consistency and pleasant taste and melting properties in the mouth.

### Example 2

Two batches of chocolate mousse dessert were prepared according to the recipes below in which Recipe I represents a standard recipe containing gelatin and recipe II represents a recipe according to the invention.

| Ingredients | Recipe I | Recipe II |
|---|---|---|
| | % | % |
| Skimmed milk powder | 3.00 | 3.00 |
| Corn syrup solids | 2.00 | 2.00 |
| Sugar | 16.00 | 16.00 |
| Cocoa | 4.00 | 4.00 |
| Chocolate | 5.00 | 5.00 |
| Admul GLP1146* | 0.75 | 0.75 |
| Gelatin 260 bloom | 0.70 | - |
| Gelling agent mixture** | - | 0.135 |
| Full fat milk | up to 100% | |

| | | |
|---|---|---|
| * Glycerol lactopalmitate emulsifier marketed by Quest International | | |
| ** The gelling agent mixture according to the invention consisted of 27% LTS agar, 18% locust bean gum and 55% guar gum | | |

For the two batches the dry ingredients were mixed and added to the milk whilst stirring. The mixtures were heated to 70°C. homogenized at 150 bar and pasteurized at 85°C for 30 sec or UHT treated at 140°C for 3-5 sec. Thereafter the mixtures were cooled to 4-6°C and kept for 1 hour. They were then aerated in a Mondomix continuous aerator till an overrun of 100% and filled aseptically into cups.

Both mousses had excellent flavour and mouthfeel and the firm and yet smooth consistency required for high quality chocolate mousse.

### Example 3

Two batches of low fat spread were prepared according to the recipes below in which Recipe I represents a standard recipe containing gelatin and recipe II represents a recipe according to the invention.

| Ingredients | Recipe I | Recipe II |
|---|---|---|
| Fat phase: | % | % |
| Fat (animal or vegetable) | 40.00 | 40.00 |
| Hymono 8903* | 0.30 | 0.30 |
| Lecithin | 0.05 | 0.05 |
| Colour: Vegex Carotene (30%)** | 0.0015 | 0.0015 |
| Aqueous phase: | | |
| Whey powder | 0.30 | 0.30 |
| Salt | 0.30 | 0.30 |
| Potassium sorbate | 0.10 | 0.10 |
| Gelatin 260 bloom | 2.50 | |
| Gelling agent mixture*** | - | 0.60 |
| 5 Lactic acid | | to pH 5.0 |
| Water | up to 100% | |

| | | |
|---|---|---|
| * Monoglyceride emulsifier marketed by Quest Intemational | | |
| ** A natural carotene food colourant marketed by Quest International (30% dispersion in vegetable oil) | | |
| *** The gelling agent mixture according to the invention consisted of 27% LTS agar, 18% locust bean gum and 55% guar gum | | |

For the two batches the ingredients for the aqueous phase were dissolved in the water and pasteurized above 85°C

The fat phase ingredients were added to the fat at a temperature above their melting point to obtain a homogeneous solution.

The water phase and the fat phase were mixed to a o/w emulsion at above 45°C.

The emulsion was cooled and worked in a scraped surface heat exchanger as decribed in US 4,443,487.

Both spreads melted easily in the mouth and had excellent taste and mouth feel. They were stable when spread at 5°C and did not exhibit water separation.

## Claims

1. A process for preparing food products comprising a gelled aqueous phase, which process comprises the steps of:
i mixing at least part of the ingredients, including the water phase, with a gelling agent mixture comprising agar, guar gum and locust bean gum at a temperature above 40°C,
ii shearing the mixture at a temperature below 40°C.

2. A process according to claim 1 wherein step i is carried out at or above 45°C.

3. A process according to claims 1 or 2 wherein step ii is carried out at or below 35°C.

4. A process according to any one of daims 1-3 wherein the food products also comprise a lipid phase.

5. A process according to claim 4 wherein the food product is a low fat spread, a mousse, or an ice cream.

6. A process according to claims 4 or 5 wherein the aqueous phase and the lipid phase are mixed above 40°C.

7. A process according to claims 4 or 5 wherein the aqueous phase and the lipid phase are mixed below 40°C.

8. A process according to any one of claims 1-7 wherein the gelling agent mixture comprises 90-10% by weight of agar, 5-80% by weight of guar gum and 5-80% by weight of locust bean gum.

9. A process according to claim 8 wherein the gelling agent mixture comprises 80-20% w/w of agar, 10-70% w/w of guar gum and 10-70% w/w of locust bean gum and the ratio between guar gum and locust bean gum is between 6:1 and 1:6.

10. A food product which is a low-fat spread, a mousse-type food or an ice cream and which comprises a lipid phase and an aqueous phase which is gelled with a gelling agent mixture comprising agar, guar gum and locust bean gum.

11. A food product comprising a lipid phase and an aqueous phase which is gelled with a gelling agent mixture consisting essentially of agar, guar gum and locust bean gum.

12. A food product comprising a lipid phase and an aqueous phase which is gelled with a gelling agent mixture comprising agar, guar gum and locust bean gum in which the ratio between guar gum and locust bean gum is between 4: 1 and 1:4,

13. A food product comprising a lipid phase and an aqueous phase which is gelled with a gelling agent mixture consisting essentially of agar, guar gum and locust bean gum and wherein said lipid phase comprises monoglyceride emuisifiers and/or diglyceride emulsifiers.

14. A food product according to any one of claims 10 to 13 wherein the lipid phase comprises at least 0.1% by weight of the food product

15. A food product according to any one of claims 10 to 14 wherein the galling agent mixture is present in an amount of between 5 and 0.01% calculated on the amount of water.

## Patentansprüche

1. Ein Verfahren zur Herstellung von Nahrungsmittelprodukten, enthaltend eine gelierte wässerige Phase, wobei das Verfahren die Stufen umfaßt:
i Mischen von mindestens einem Teil der Bestandteile, einschließlich der Wasserphase, mit einem Geliermittelgemisch, enthaltend Agar, Guargummi und Johannisbrotkernmehl bei einer Temperatur über 40°C,
ii Scheren des Gemischs bei einer Temperatur unter 40°C.

2. Ein Verfahren gemäß Anspruch 1, worin Stufe i bei oder über 45°C durchgeführt wird.

3. Ein Verfahren gemäß der Ansprüche 1 oder 2, worin Stufe ii durchgeführt wird bei oder unter 35°C.

4. Ein Verfahren gemäß einem der Ansprüche 1 bis 3, worin die Nahrungsmittelprodukte außerdem eine Lipidphase enthalten.

5. Ein Verfahren gemäß Anspruch 4, worin das Nahrungsmittelprodukt ein fettarmer Aufstrich, eine Schaumspeise oder eine Eiscreme ist.

6. Ein Verfahren gemäß der Ansprüche 4 oder 5, worin die wässerige Phase und die Lipidphase oberhalb von 40°C vermischt werden.

7. Ein Verfahren gemäß der Ansprüche 4 oder 5, worin die wässerige Phase und die Lipidphase unter 40°C vermischt werden.

8. Ein Verfahren gemäß einem der Ansprüche 1 bis 7, worin das Geliermittelgemisch 90-10 Gewichts-% Agar, 5-80 Gewichts-% Guargummi und 5-80 Gewichts-% Johannisbrotkernmehl enthält.

9. Ein Verfahren gemäß Anspruch 8, worin das Geliermittelgemisch 80-20% G/G Agar, 10-70% G/G Guargummi und 10-70% G/G Johannisbrotkernmehl enthält und das Verhältnis zwischen Guargummi und Johannisbrotkernmehl zwischen 6:1 und 1:6 beträgt.

10. Ein Nahrungsmittelprodukt, welches ein fettarmer Aufstrich, ein schaumspeisenartiges Nahrungsmittel oder eine Eiscreme ist, welche eine Lipidphase und eine wässerige Phase enthalten, die geliert ist mit einem Geliermittelgemisch, enthaltend Agar, Guargummi und Johannisbrotkernmehl.

11. Ein Nahrungsmittelprodukt, enthaltend eine Lipidphase und eine wässerige Phase, welche geliert ist mit einem Geliermittelgemisch, bestehend im wesentlichen aus Agar, Guargummi und Johannisbrotkernmehl.

12. Ein Nahrungsmittelprodukt, enthaltend eine Lipidphase und eine wässerige Phase, welche geliert ist mit einem Geliermittelgemisch, enthaltend Agar, Guargummi und Johannisbrotkernmehl, worin das Verhältnis zwischen Guargummi und Johannisbrotkernmehl zwischen 4:1 und 1:4 beträgt.

13. Ein Nahrungsmittelprodukt, enthaltend eine Lipidphase und eine wässerige Phase, die geliert ist mit einem Geliermittelgemisch, bestehend im wesentlichen aus Agar, Guargummi und Johannisbrotkernmehl und worin diese Lipidphase Monglycerid-Emulgatoren und/oder Diglycerid-Emulgatoren enthält.

14. Ein Nahrungsmittelprodukt gemäß einem der Ansprüche 10 bis 13, worin die Lipidphase mindestens 0,1 Gewichts-% des Nahrungsmittelproduktes ausmacht.

15. Ein Nahrungsmittelprodukt gemäß einem der Ansprüche 10 bis 14, worin das Geliermittelgemisch vorliegt in einer Menge zwischen 5-0,01% berechnet auf die Menge an Wasser.

## Revendications

1. Procédé de préparation de produits alimentaires comprenant une phase aqueuse gélifiée, ce procédé comprenant les étapes consistant à :
i mélanger au moins une partie des ingrédients, incluant la phase aqueuse, avec un mélange d'agents gélifiants comprenant agar, gomme guar et gomme de caroube, à une température supérieure à 40°C,
ii traiter le mélange par cisaillement à une température inférieure à 40°C.

2. Procédé selon la revendication 1, dans lequel l'étape i est mise en oeuvre à 45°C ou au-dessus.

3. Procédé selon la revendication 1 ou 2, dans lequel l'étape ii est mise en oeuvre à 35°C ou en dessous.

4. Procédé selon l'une quelconque des revendications 1-3, dans lequel les produits alimentaires comprennent également une phase lipidique.

5. Procédé selon la revendication 4, dans lequel le produit alimentaire est une pâte à tartiner à faible teneur en matières grasses, une mousse ou un crème glacée.

6. Procédé selon la revendication 4 ou 5, dans lequel la phase aqueuse et la phase lipidique sont mélangées au-dessus de 40°C.

7. Procédé selon la revendication 4 ou 5, dans lequel la phase aqueuse et la phase lipidique sont mélangées en dessous de 40°C.

8. Procédé selon l'une quelconque des revendications 1-7, dans lequel le mélange d'agents gélifiants comprend 90-10 % en poids d'agar, 5-80 % en poids de gomme guar et 5-80 % en poids de gomme de caroube.

9. Procédé selon la revendication 8, dans lequel le mélange d'agents gélifiants comprend 80-20 % p/p d'agar, 10-70 % p/p de gomme guar et 10-70 % p/p de gomme de caroube et le rapport entre gomme guar et gomme de caroube est compris entre 6/1 et 1/6.

10. Produit alimentaire qui est une pâte à tartiner à faible teneur en matières grasses, un aliment de type mousse ou une crème glacée et qui comprend une phase lipidique et une phase aqueuse qui est gélifiée avec un mélange d'agents gélifiants comprenant agar, gomme guar et gomme de caroube.

11. Produit alimentaire comprenant une phase lipidique et une phase aqueuse qui est gélifiée avec un mélange d'agents gélifiants consistant essentiellement en de l'agar, de la gomme guar et de la gomme de caroube.

12. Produit alimentaire comprenant une phase lipidique et une phase aqueuse qui est gélifiée avec un mélange d'agents gélifiants comprenant agar, gomme guar et gomme de caroube, dans lequel le rapport entre gomme guar et gomme de caroube est compris entre 4/1 et 1/4.

13. Produit alimentaire comprenant une phase lipidique et une phase aqueuse qui est gélifiée avec un mélange d'agents gélifiants consistant essentiellement en de l'agar, de la gomme guar et de la gomme de caroube, dans lequel la phase lipidique comprend des émulsifiants monoglycéridiques et/ou des émulsifiants diglycéridiques.

14. Produit alimentaire selon l'une quelconque des revendications 10 à 13, dans lequel la phase lipidique comprend au moins 0,1% en poids du produit alimentaire.

15. Produit alimentaire selon l'une quelconque des revendications 10 à 14, dans lequel le mélange d'agents gélifiants est présent en une quantité comprise entre 5 et 0,01 %, calculée par rapport à la quantité d'eau.
